# EUROPÄISCHE PATENTSCHRIFT

(11) **EP 2 588 308 B1**
(45) Veröffentlichungstag und Bekanntmachung des Hinweises auf die Patenterteilung: **09.11.2016**
(21) Anmeldenummer: 11729044.5
(22) Anmeldetag: 28.06.2011
(51) Int. Cl.: B32B 17/10, E06B 5/16

(54) **BRANDSCHUTZ-VERBUNDGLAS**
LAMINATED FIRE-RESISTANT GLASS UNIT
VERRE FEUILLETÉ COUPE-FEU

(30) Priorität: 29.06.2010 CH 10482010
(43) Veröffentlichungstag der Anmeldung: 08.05.2013
(73) Patentinhaber: Vetrotech Saint-Gobain (International) AG, 3175 Flamatt (CH)
(72) Erfinder: WILDENHAIN, Klaus, 41516 Grevenbroich (DE); GELDERIE, Udo, 52146 Würselen (DE); SCHWANKHAUS, Norbert, 52499 Baesweiler (DE)
(74) Vertreter: Frei Patent Attorneys
(86) Internationale Anmeldenummer: PCT/CH2011/000154
(87) Internationale Veröffentlichungsnummer: WO 2012/000125

(56) Entgegenhaltungen:
- WO-A1-2008/110021
- WO-A1-2010/070036
- CH-A- 548 525
- DE-A1- 2 813 320
- DE-A1- 4 340 690
- DE-A1- 10 305 733
- DE-B- 1 118 626
- DE-B1- 1 696 051
- DE-B3- 10 225 555

## Beschreibung

Die Erfindung betrifft ein Brandschutz-Verbundglas.

Solche Brandschutz-Verbundgläser sind beispielsweise aus der EP 0 620 781 bekannt. Die in dieser Schrift gelehrte Brandschutzschicht ist ein wässriges Alkalisilikat, welche durch Aushärten einer wasserhaltigen Füllmasse aus einem Alkalisilikat und einem Härter zu einem Polysilikat erzeugt wird. Im Polysilikat besteht dabei ein Molverhältnis von Siliziumdioxid zu Alkali-Metalloxid von mindestens 4:1.

Ein weiteres Brandschutz-Verbundglas mit einer Brandschutz-Zwischenschicht lehrt beispielsweise die FR 2 607 491 oder aus der WO 2007/118887. Im Unterschied zur EP 0 620 781 wird in diesem Verbundglas das Alkalisilikat auf der einen Glasscheibe getrocknet. Die zweite Glasscheibe wird nach dem Trocknungsprozess mit der Brandschutzschicht verklebt.

Andere Brandschutz-Verbundgläser weisen Brandschutzzwischenschichten aus Hydrogelen, und/oder - beispielsweise als Brandschutz-Isoliergläser ausgebildet - Zwischenschichten aus Silikonen, Epoxy-Harzen, Polyvinylbutyral (PVB), Ethylenvinylacetat (EVA), Thermoplastischen Elastomeren auf Polyurethanbasis (TPU) oder Fluorkohlenwasserstoffen (THV) etc. auf.

Für viele Ausführungsformen sind die als Trägerelemente eingesetzten Glasscheiben als sogenannte Einscheiben-Sicherheitsgläser (ESG), d.h. thermisch und/oder chemisch vorgespannte Gläser ausgebildet. Diese weisen einerseits die bekannten Sicherheitsvorteile auf, indem sie im Bruchfall in viele kleine Bruchstücke zerfallen, die eine verringerte Verletzungsgefahr mit sich bringen. Andererseits tragen sie durch ihre erhöhte Temperaturwechselbeständigkeit auch zu den vorteilhaften feuerwiderstandsfähigen Eigenschaften des Verbundglases bei.

Solche Brandschutzgläser haben sich in der Praxis sehr bewährt, und sie weisen im Brandfall die je nach Spezifikation notwendige Beständigkeit auf und erfüllen die von den einschlägigen Normen vorgegebenen Vorschriften.

Es ist eine Aufgabe der Erfindung, die Sicherheit von Brandschutzgläsem noch weiter zu erhöhen.

Diese Aufgabe wird gelöst durch die Erfindung, wie sie in den Patentansprüchen definiert ist.

Die Erfindung zeichnet sich im Wesentlichen dadurch aus, dass mindestens eine Glasscheibe (Glasplatte) des Brandschutz-Verbundglases, vorzugsweise die beiden äussersten Glasscheiben (d.h. die beiden Glasscheiben im Falle eines Verbundglases mit genau zwei Glasscheiben) oder gar alle an eine Zwischenschicht angrenzenden Glasscheiben mit einer gezielten lokalen Schwächung (Sollbruchstelle; definierte Schwachstelle) versehen sind. Eine Sollbruchstelle kann beispielsweise eine Furche, insbesondere eine Einkerbung sein.

Der Begriff "Glasplatte" oder "Glasscheibe" bezeichnet hier nicht nur flache Elemente, sondern schliesst auch nach innen oder nach aussen gewölbte oder gebogene Glasplatten mit ein.

Als Brandschutz-Verbundglas wird hier ein Aufbau mit Brandschutzeigenschaften bezeichnet, welcher mindestens zwei transparente Trägerelemente beinhaltet, zwischen denen eine Zwischenschicht angeordnet ist. Die Transparenz kann auch nur eine teilweise Transparenz sein, bspw. indem mindestens eines der Trägerelemente eingefärbt und/oder eingetrübt ist. Die Zwischenschicht kann homogen sein oder ihrerseits mehrere Teilschichten umfassen. Zusätzlich zu den mindestens zwei durch eine Zwischenschicht verbundenen Glasscheiben können weitere Elemente vorhanden sein, bspw. eine weitere transparente Glas- oder Kunststoffscheibe und ein gasgefüllter oder vakuumierter Zwischenraum, wodurch das Verbundglas zum Brandschutz-Isolierglas wird.

Sollbruchstellen an einzelnen Glasscheiben - auch durch Einkerbungen - sind an sich längst bekannt, zum Beispiel aus der CH 548 525. Das Anbringen einer gezielten lokalen Schwächung bei einem Brandschutz-Verbundglas ist jedoch scheinbar dem Zweck eines Brandschutzglases abträglich, soll doch ein Brandschutzglas insbesondere auch unter grossen thermischen Spannungen möglichst lange intakt bleiben. Es hat sich aber überraschend gezeigt, dass bei einem Brandschutz-Verbundglas eine Stärkung des ganzen Verbundes bewirkt wird, indem mindestens zwei durch eine Zwischenschicht getrennte und/oder mindestens zwei äusserste Glasscheiben mit einer gezielten lokalen Schwächung versehen sind. Insbesondere hat sich gezeigt, dass mit einer solchen gezielten lokalen Schwächung der folgende Fall verhindert werden kann: Bei grosser Hitzeeinwirkung kann sich zwischen den Scheiben ein enormer Druck aufbauen. Wenn die feuerseitige Scheibe dann unter Volllast bricht, wird explosionsartig relativ viel Energie freigesetzt, und es lösen z.B. Türmechanismen aus, die zum Öffnen von Türen führen oder es werden aufgeklipste Glashalteleisten gelockert, die dann in den Brandraum fallen. Dies führt zu einem vorzeitigen Versagen des Bauteils.

Ein solches Platzen der Scheiben kann bei Brandschutz-Verbundgläsern gemäss dem Stand der Technik beispielsweise einem durch Verdampfung von Materialien zwischen den Glasscheiben (bspw. von Wasser im Falle einer aufschäumenden Brandschutzschicht oder durch Hydro-Gele, welche Wasser verdampfen und kühlend wirken) entstehenden Überdruck zugeschrieben werden, durch welchen beim Platzen der brandseitigen Glasscheibe explosionsartig relativ viel Energie freigesetzt wird. Diese freiwerdende Energie der relativ spät platzenden feuerseitigen ESG Scheibe, setzt mechanische Kräfte im Bauteil frei, die Glashalteleisten absprengen oder Türen im Bauteil öffnen können.

Im Gegensatz dazu bewirkt das erfindungsgemässe Vorgehen, dass beim im Allgemeinen zuerst stattfindenden Brechen der brandseitigen Glasscheibe relativ wenig Energie freigesetzt wird und so insbesondere die jeweils von Brandherd weiter entfernte Glasscheibe nicht gefährdet wird. Der erfindungsgemässe Ansatz bewirkt ein frühzeitiges Platzen des feuerseitigen Glases, ohne dass zu viel Druckenergie aufgebaut werden kann.

Bei Brechen der brandseitigen Glasscheibe wirkt die gezielte lokale Schwächung als Sollbruchstelle (definierte Bruchstelle), und der Temperaturgradient ΔT beim Brechen wird vermindert. Ein späteres Platzen unter grosser Energiefreisetzung und mit dadurch verursachten Schockwellen wird so durch diesen gesteuerten Glasbruch verhindert. Nach dem Bruch der brandseitigen Glasscheibe bleiben die Brandschutzwirkung der Zwischenschicht und die restliche(n) Glasscheibe(n) intakt, und es kann im Zwischenraum zwischen den Glasscheiben kein erhöhter Druck aufgebaut werden.

Weil in vielen Fällen nicht bekannt ist, auf welcher Seite eines Bauteils mit Brandschutzverbundglas ein Brand ausbricht und weil oft auch nicht bekannt ist, welche Seite des Brandschutzglases zum Feuer eingebaut wird, sind mit Vorteil beide an eine Zwischenschicht angrenzenden Glasscheiben mit einer Schwächung/Sollbruchstelle versehen.

Die Zwischenschicht ist eine aufschäumende/aufblähende Brandschutzschicht, mit oder ohne Randverbund, beispielsweise auf Alkalisilikatbasis, zum Beispiel gemäss EP 0 620 781 oder eine durch Trocknen einer Alkalisilikatmasse hergestellte Schicht.

Im Allgemeinen wird die Zwischenschicht fest und/oder flüssig sein, wobei auch Systeme aus festen und flüssigen Phasen (z.B. disperse Systeme, darunter Gele) und Systeme mit einem nicht klar definierten fest-flüssig-Übergang in Frage kommen.

Die Zwischenschicht kann insbesondere so ausgebildet sein, dass bei Hitzeinwirkung unter Brandschutz-Testbedinungen (bspw. bei auf das Verbundglas einwirkenden Temperaturen bei einer Wärmebelastung in Funktion der Zeit gemäss ISO 834-1) aufgrund einer physikalischen Phasenumwandlung (Verdampfung von Wasser oder einem anderen Lösungsmittel, bspw. in kleinen Bläschen bei aufschäumenden Materialien, Verflüssigung eines Feststoffs) und/oder einer chemischen Reaktion,bspw. einer thermischen Zersetzung (Pyrolyse) im Zwischenraum zwischen den Trägerelementen Gas entsteht oder die Gas-Stoffmenge vergrössert wird. Der Druck p folgt näherungsweise der allgemeinen Glasgleichung *V·p=n·R·T* wobei n = m/MM die Gas-Stoffmenge ist. (m ist die Masse eines Stoffes in der Gasphase, MM ist die Molmasse des jeweiligen Gases). In der Gleichung bezeichet weiterhin V das Volumen R die universelle Gaskonstante und T die absolute Temperatur. Die Masse m des Stoffes in der Gasphase nimmt aber aufgrund der Phasenumwandlung und/oder Reaktion während des Brandes kontinuierlich zu. Damit steigt der Druck in der Scheibe stärker an, als wenn der Zwischenraum zwischen den Glassscheiben bloss mit einem Gas gefüllt wäre und die Gasmasse m - wie bspw. bei einem Isolierglas - immer konstant wäre.

Das kann einen Druckanstieg bewirken, der über den Druckanstieg hinausgeht, den ein rein gasgefülltes Zwischenschicht-Volumen nach den für sogenannt, ideales Gas' geltenden Gesetzmässigkeiten (Gesetz von Amontons) erfahren würde. Der Druckanstieg der bereits vorhandenen oder erzeugten Gase bei ansteigender Temperatur erfolgt dann im Allgemeinen gemäss den aus der physikalischen Chemie bekannten Gesetzmäßigkeiten für ideale oder reale Gase ("Gas-Gesetze")..

In den meisten Aufführungsformen sind die Glasscheiben Flachglas-Platten.

Für viele Ausführungsformen sind die als Trägerelemente eingesetzten Glasscheiben als sogenannte Sicherheitsgläser, d.h. vorgespannte Gläser ausgebildet. Vorgespannte Gläser können thermisch vorgespannte Gläser (bspw. nach DIN 12150-1 oder DIN EN 14179-1 (heissgelagertes Einscheibensicherheitsglas)) oder chemisch vorgespannte Gläser (EN 12337) sein. In gewissen Ausführungsformen sind auch teilvorgespannte Gläser, z.B. nach DIN EN 1863, verwendbar. Insbesondere sind in Ausführungsformen, in denen beide oder alle an eine Zwischenschicht angrenzenden Glasscheiben mit einer definierten Schwächung versehen sind, beide/alle diese mit einer Schwächung versehenen Glasplatten vorgespannt oder eventuell mindestens teilvorgespannt.

Eine lokale Schwächung liegt als örtlich definierte und begrenzte, an der Glasplatte (Scheibe) (im Allgemeinen ggf. vor dem Vorspannen) vorgenommene Materialabtragung vor. Sie kann die Form einer Furche/Kerbe, beispielsweise Einfräsung, Vertiefung, haben. Die gezielte lokale Schwächung kann mit mechanischen Mitteln (z.B. mittels geeigneter Glasbearbeitungsmaschinen, Glasfräsen, Glasbohrern, Glasritzswerkzeuge etc.), oder auch mit anderen Mitteln, zum Beispiel Lasern Wasserstrahl-Glasbearbeitungsmaschinen etc. beigebracht sein.

Wenn die Glasscheibe als Flachglas mit einer rechteckigen, rhombischen, kreisförmigen, elliptischen etc. Form vorliegt, kann diese durch die lokale Schwächung von ihrer ansonsten im Sinne der Mathematik als geometrischer Körper konvexen Form abweichen. Ein geometrischer Körper ist konvex im mathematischen Sinn wenn jede Verbindungsstrecke zwischen zwei Punkten des Körpers im Körper ist; die Eigenschaft "konvex" impliziert keinesfalls eine Krümmung der - in vielen Ausführungsformen ebenen - Glasscheiben. Diese lokalen Schwächungen unterscheiden sich beispielsweise durch dieses Abweichen von der konvexen Form von den ansonsten eventuell vorgenommenen Materialabtragungen, beispielsweise angeschliffenen Fasen, Gehrungskanten etc. In gewissen Ausführungsformen, insbesondere in Ausführungsformen, in denen das Brandschutzglas nicht als Flachglas oder bspw. in Sternform ausgebildet ist, ist die Basisform nicht notwendigerweise konvex. Dann können aber können Teilbereiche des Brandschutzglases konvex im obigen Sinne sein, und die gezielte lokale Schwächung kann lokal eine Abweichung von dieser Form darstellen.

Durch die Abweichung von der konvexen Form wird wie gewünscht eine gezielte Schwachstelle geschaffen, die als Sollbruchstelle dient. Eine solche Schwächung in Form einer Furche/Kerbe, Vertiefung, etc., bei Flachglas im Allgemeinen als Abweichung von der mathematisch konvexen Form, wird hier auch als "mechanische Schwächung" bezeichnet.

Die Sollbruchstelle kann beispielsweise so ausgebildet sein, dass ein Bruch bei Temperaturgradienten ΔT von zwischen 40 K und 250°K geschieht. ΔT ist dabei als Thermogradient zwischen einem Punkt der Glasscheibe mit hoher Temperatur (in der Regel im Brandfall die Scheibenfläche bzw. Scheibenmitte) und einem Punkt mit niedrigerer Temperatur (in der Regel der Randbereich der Scheibe im Falzraum des Rahmensystems durch Glasrand-Überdeckung) definiert. Der Thermogradient bei dem Glas spontan bricht (Basis-Floatglas bzw. Einscheibensicherheitsglas) liegt laut Literatur bei ca. 40K für technisch entspannte Gläser (Floatglas) und 150 K für thermisch vorgespannte Gläser (Einscheibensicherheitsglas).

Die Sollbruchstelle kann ausserdem so definiert sein, dass die Glasscheibe trotz der Sollbruchstelle dem normierten Pendelschlagversuch (DIN EN 12600) standhält und die gleichen mechanischen Sicherheitseigenschaften gegeben sind wie bei nicht gezielt geschädigtem Einscheibensicherheitsglas.

Ergänzend zu einer mechanischen lokalen Schwächung kann auch eine gezielte lokale chemische Schwächung des Glases vorgesehen sein. Eine solche besteht beispielsweise darin, dass lokal ein anderes, mechanisch weniger stabiles Material der Glasscheibe vorgesehen ist, bspw. durch einen Austausch von Ionen (bspw. Natrium gegen Kalium) in der Nähe der Glasoberfläche entlang der gezielten lokalen Schwächung. Ein nicht nur lokaler Austausch von Ionen an der Glasoberfläche ist an sich von chemischen Vorspannprozessen bekannt. Eine lokale chemische Schwächung kann optisch unsichtbar sein und kann daher auch an Stellen vorliegen, an denen eine mechanische Schwächung optisch unvorteilhaft wäre. Insbesondere kann die chemische Schwächung bspw. linienförmig und sich über eine ganze Breite der Glasscheibe erstreckend vorliegen.

Des Weiteren sind auch Schwächungen in der vorher beschriebenen Weise durch eine Laserbehandlung des Glases möglich, bei der nicht notwendigerweise eine Material-Abtragung erfolgen muss.

Die gezielte (mechanische) lokale Schwächung oder die gezielten lokalen Schwächungen können beispielsweise als Furche (mit konstanter oder nicht konstanter Tiefe, Breite und/oder Richtung) vorhanden sein. Ein Beispiel einer Furche mit nicht-konstanter, sondern sich von der Kante weg stetig verringernder Tiefe ist eine Kerbe. Ergänzend oder alternativ dazu kommen auch Sacklöcher in der Kante oder einer Flachseite, Paare von miteinander fluchtenden Sacklöchern in den beiden Flachseiten, durchgehende Bohrungen oder andere in Frage.

Die gezielte (mechanische) lokale Schwächung befindet sich vorzugsweise in einem Randbereich in unmittelbarer Nachbarschaft zur Kante, bspw. im Bereich einer Randabdichtung (sofern eine solche vorhanden ist) und allenfalls nicht oder höchstens einige cm von der Randabdichtung bzw. dem Rahmen nach innen ragend. Insbesondere kann der Abstand der gezielten lokalen Schwächung bzw. deren senkrecht zur Kante gemessene Ausdehnung in beispielhaften Ausführungsformen höchstens 10% der entsprechenden Breite bzw. Höhe des Verbundglases betragen.

Aus praktischen Gründen kann es vorteilhaft sein, wenn die gezielte lokale Schwächung in Form einer Materialabtragung an der äusseren, von der Zwischenschicht abgewandten Seite der Glasscheibe angebracht ist. Das ist jedoch nicht eine notwendige Bedingung. Es ist in vielen Ausführungsformen auch möglich, die lokale Schwächung auf der inneren Seite auf beiden Seiten oder von der Kante her anzubringen.

Bei einem Brandschutz-Verbundglasbauteil mit Rahmen erstreckt sich also vorzugsweise die gezielte lokale Schwächung nicht in den lichten Bereich oder höchstens in einen Randbereich des lichten Bereichs.

Vorgespannte Gläser weisen Zonen verschiedener Spannungen auf, insbesondere eine Druckspannungszone und eine Zugspannungszone. Bei thermisch vorgespannten Gläsern befinden sich die Druckspannungszone aussen und die Zugspannungszone innen. Wenn die Glasscheibe mit der gezielten lokalen Schwächung vorgespannt ist, dann erstreckt sich die lokale Schwächung vorzugsweise ganz in einer einzigen Spannungszone und durchbricht also keine Zonengrenze zwischen der Druckspannungszone und der Zugspannungszone. Bei vorgespannten Gläsern, deren Druckspannungszone aussen ist (dazu gehören die thermisch vorgespannten Gläser), ist die Schwächung vollständig innerhalb der Druckspannungszone vorhanden.

Nachfolgend werden Ausführungsbeispiele der Erfindung anhand von Figuren näher erläutert. In den Figuren bezeichnen gleiche Bezugszeichen gleiche oder analoge Elemente. Es zeigen:
- Figuren 1a bis 1f: schematisch verschiedene Aufbauten von Brandschutzgläsern;
- Figuren 2 bis 6: Ausgestaltungen von lokalen mechanischen Schwächungen einer Glasscheibe im Randbereich;
- Figur 7: eine Schnittdarstellung eines vorgespannten Glases mit Druckspannungszone und Zugspannungszone;
- Figur 8: eine Ansicht einer Glasscheibe mit möglichen Anordnungen der lokalen Schwächung;
- Figuren 9 bis 12: Ansichten von Glasscheiben mit lokalen Schwächungen;
- Figur 13: Ein Brandschutzverbundglas-Bauelement mit Rahmen und Klotzung; und
- Figuren 14a bis 14d: Darstellungen einer Glasscheibe gemäss einem Ausführungsbeispiel.

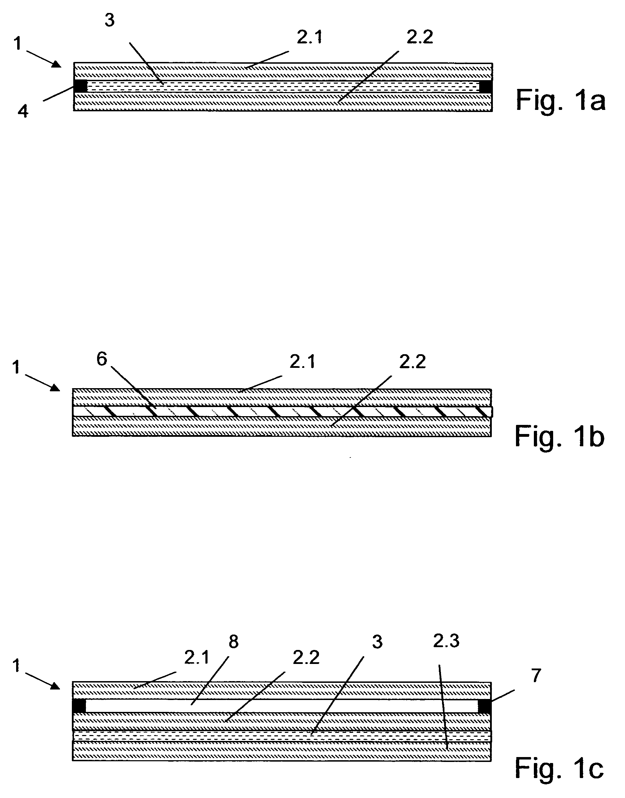

Anhand der schematischen **Figuren 1a-1f** werden zunächst verschiedene Brandschutzgläser kurz beschrieben, welche eine Zwischenschicht aufweisen und gemäss dem erfindungsgemässen Ansatz mit mindestens einer (in Figuren 1a-1f nicht gezeichneten) gezielten lokalen Schwächung versehen sein können. Die Figuren zeigen:
- **Figur 1a** ein Brandschutz-Verbundglas 1 mit zwei Glasscheiben 2.1, 2.2 mit dazwischen angeordneter aufschäumender Brandschutzschicht 3 mit Randabdichtung 4; das Verbundglas kann bspw. durch Aushärten Brandschutzmasse hergestellt werden, welche zunächst flüssig in den mit Hilfe der Randabdichtung 4 (Randverbund) definierten Zwischenraum zwischen die Glasscheiben 2.1, 2.2 und eingefüllt und dort thermisch ausgehärtet wird.
- **Figur 1b** (Vergleichsbeispiel) ein Brandschutz-Verbundglas 1 aus zwei vorgespannten Glasscheiben 2.1, 2.2, welche durch eine Kunststoffschicht 6, bspw. PVB, oder eine Silikonschicht miteinander verbunden sind.
- **Figur 1c** ein Brandschutz-Verbundglas 1 mit zwei Glasscheiben 2.2, 2.3 und dazwischen angeordneter aufschäumender Zwischenschicht 3 aber ohne Randabdichtung. Die Zwischenschicht ist bspw. durch Trocknen einer Brandschutzmasse auf einer der Glasscheiben 2.2, 2.3 hergestellt. Ausserdem weist das Brandschutzglas eine weitere Glasscheibe 2.1 auf, wobei zwischen dem Brandschutzglas-Verbund aus den zwei Glasscheiben 2.2, 2.3 und der aufschäumenden Zwischenschicht einerseits und der weiteren Glasscheibe 2.1 andererseits ein isolierender, gasgefüllter oder vakuumierter Zwischenraum 8 vorhanden ist, der durch eine gasdichte Randabdichtung 7 gegen aussen abgedichtet wird. Figur 1c ist dadurch ein Beispiel eines Brandschutz-Isolierglases; selbstverständlich können Brandschutz-Isoliergläser auch in anderen Konfigurationen vorliegen, bspw. mit aufschäumender Zwischenschicht 3 mit Randabdichtung 4, in Konfigurationen mit mehreren aufschäumenden und/oder nicht aufschäumenden Zwischenschichten etc.

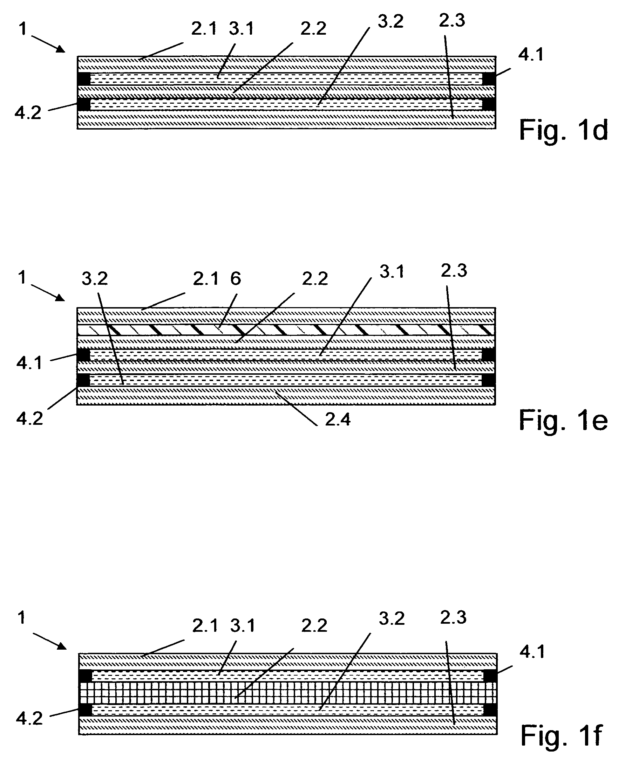

- **Figur 1d** ein Brandschutz-Verbundglas 1 mit drei Glasscheiben 2.1, 2.2, 2.3 mit dazwischen angeordneten aufschäumenden Brandschutzschichten 3.1, 3.2, hier jeweils mit Randabdichtung 4.1, 4.2; auch Brandschutz-Verbundgläser mit mehr als drei Glasscheiben und mehr als zwei aufschäumenden Zwischenschichten und/oder mit gasgefüllten oder vakuumierten Zwischenräumen sind möglich.
- **Figur 1e** ein Brandschutz-Verbundglas 1 mit drei Glasscheiben 2.2, 2.3, 2.4 mit dazwischen angeordneten aufschäumenden Brandschutzschichten 3.1, 3.2, hier ebenfalls jeweils mit Randabdichtung 4.1, 4.2, sowie mit einer weiteren Glasscheibe 2.1, die mit einer weiteren Zwischenschicht 6 aus Kunststoff am Brandschutzglas-Verbund aus den drei Glasscheiben 2.2, 2.3, 2.4 und den aufschäumenden Zwischenschichten 3.1, 3.2 befestigt ist.
- **Figur 1f** ein Brandschutz-Verbundglas 1 mit einem ähnlichen Aufbau wie das Brandschutz-Verbundglas gemäss Figur 1d (ebenfalls mit oder ohne Randabdichtung), wobei jedoch das mittlere 2.2 der drei transparenten Trägerelemente nicht als (thermisch vorgespannte) Glasscheibe, sondern als Glaskeramik-Scheibe vorhanden ist. In dieser Ausführungsform können beispielsweise die beiden äusseren 2.1, 2.3, als thermisch vorgespannte Glasscheiben (ESG) vorhandenen Trägerelemente je mit einer gezielten lokalen Schwächung versehen sein; auch eine solche Schwächung der Glaskeramik-Scheibe 2.2 ist nicht ausgeschlossen.

In diesen Konfigurationen ist jeweils mindestens eine an eine Zwischenschicht 3, 3.1, 3.2, 6 angrenzende Glasscheibe mit einer gezielten lokalen Schwächung versehen, welche als Sollbruchstelle dient. Besonders bevorzugt ist, dass in den Ausführungsformen mit aufschäumender Zwischenschicht alle an eine aufschäumende Brandschutz-Zwischenschicht 3, 3.1, 3.2 angrenzenden Glasscheiben mit einer Schwächung versehen sind. In den Ausführungsformen (wie Fig. 1b) ohne aufschäumende Zwischenschicht oder eventuell auch in allen Ausführungsformen (bspw. auch der Ausführungsform gemäss Figur le) sind bevorzugt alle an eine Zwischenschicht 6; 3, 3.1, 3.2 positionierten Gläser oder Platten mit einer gezielten lokalen Schwächung versehen.

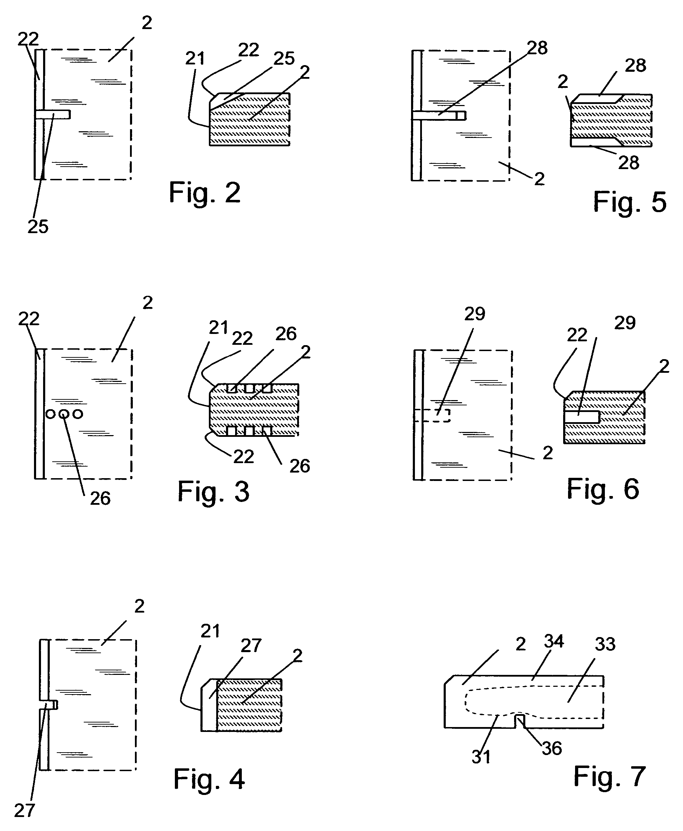

Figuren 2 bis 6 zeigen beispielhaft mögliche Ausgestaltungen von lokalen Schwächungen einer Glasscheibe im Randbereich. Jede der Figuren zeigt links eine Ansicht einer auf einen Ausschnitt der Oberfläche einer Glasscheibe 2 von der Flachseite her und im Bereich einer Kante 21 derselben. Rechts zeigen die Figuren jeweils eine Darstellung der durch die Schwächung hindurch senkrecht zur Plattenebene geschnittenen Glasscheibe, ebenfalls im Kantenbereich. In den dargestellten Ausführungsbeispielen ist die Glasscheibe an der Kante jeweils einseitig oder beidseitig mit einer Fase 22 versehen; eine solche Fase ist jedoch optional, und alle gezeigten Ausführungsformen lassen sich jeweils sowohl an Glasscheiben ohne Fase als auch an Glasscheiben mit einer Fase (auf der einen oder der anderen Seite) als auch an Glasscheiben mit beidseitig je einer Fase realisieren. Eine Fase kann dabei eine "gebrochene" oder "gesäumte", eine geschliffene und/oder polierte Kante sein (siehe z.B. EN 12150-1 Fassung Nov.2000 unter Punkt 7 beschrieben).

Die lokale Schwächung gemäss **Figur 2** ist eine nur einseitig angebrachte Furche, die in der dargestellten Ausführungsform als Kerbe 25 ausgebildet ist.

Die lokale Schwächung der Ausführungsform gemäss **Figur 3** weist mehrere nebeneinander angeordnete Sackloch-Bohrungen 26 auf. Im dargestellten Beispiel ist die lokale Schwächung in der Form dreier in einer senkrecht zur Kante verlaufenden Reihe angeordneter Paare von miteinander fluchtenden Sacklöchern ausgebildet. Es ist jedoch auch möglich, das Sackloch bzw. die Sacklöcher nur auf einer Seite der Glasplatte 2 vorzusehen, eine von der gezeichneten Anzahl abweichende Anzahl von Sacklöchern und/oder andere Anordnungen vorzusehen. Auch die Form der Sacklöcher (im gezeichneten Beispiel zylindrisch) ist nur eine von vielen Möglichkeiten. Insbesondere sind auch bspw. ringförmige Vertiefungen oder konische Vertiefungen oder andere Formen möglich.

Gemäss **Figur 4** ist die lokale Schwächung als Furche 27 in der Kante 21 der Glasscheibe ausgebildet.

**Figur 5** zeigt ein Ausführungsbeispiel, bei welchem die lokale Schwächung ebenfalls eine Furche 28 mit im Unterschied zur Kerbe gemäss Fig. 2 abschnittsweise konstanter Tiefe aufweist, wobei die Furche in der Flachseite eingebracht ist und von der Kante weg und ungefähr senkrecht zu dieser verläuft. Ausserdem ist die lokale Schwächung im gezeichneten Beispiel - optional - als Paar von einander gegenüberliegenden Furchen in den beiden Flachseiten vorhanden.

Es wäre auch möglich, eine Schwächung als Furche auf einer Flachseite oder auf beiden Flachseiten vorzusehen, wenn die Furche nicht bis zur Kante hin verläuft; im Prinzip kann eine Furche sogar parallel zur Kante laufen oder einen nicht-geraden Verlauf haben. Ein Vorsehen einer Furche entweder in der Kante (wie in Fig. 4) oder bis zur Kante hin (wie in Fig. 2 oder Fig. 5) kann jedoch aus herstellungstechnischen Gründen vorteilhaft sein; ausserdem haben sich solche Furchen als effektiv herausgestellt.

**Figur 6** schliesslich zeigt eine Variante, bei der die lokale Schwächung als von der Kante her ins Innere der Glasscheibe verlaufende Bohrung 29 ausgebildet ist.

Allen Ausführungsformen der Figuren 2 bis 6 ist gemeinsam dass die Glasscheibe an sich als konvexer Körper im mathematischen Sinn ausgebildet ist und die Schwächung eine Abweichung von der konvexen Form darstellt. Dadurch wird wie gewünscht eine gezielte Schwachstelle geschaffen, die als Sollbruchstelle dient.

In **Figur 7** ist schematisch einen Schnitt durch eine thermisch vorgespannte Glasscheibe mit einer Fase im Bereich der Kante gezeigt. Vorgespannte Gläser weisen eine äussere Druckspannungszone 34 und eine innere Zugspannungszone 33 auf. Die Zonengrenze 31 sollte nicht unterbrochen sein, weil ansonsten die Glasscheibe mechanisch nicht stabil ist. Die gezielte lokale Schwächung ist daher bei vorgespannten Gläsern vorzugsweise so angeordnet, dass die gesamte Schwächung (Furche/Kerbe, Vertiefung, etc.) innerhalb der Druckspannungszone verläuft. Bei einem (ohnehin bevorzugten) Anbringen der Schwächung vor dem thermischen Vorspannen wird der Verlauf der Zonengrenze unter Umständen von der Schwächung selbst beeinflusst. Insbesondere kann sie sich lokal im Bereich der Schwächung nach innen verschieben. Die lokale Schwächung kann also auch dann die Bedingung erfüllen, dass die mechanische lokale Schwächung innerhalb der Druckspannungszone verläuft, wenn sie sich weiter ins innere der Glasscheibe erstreckt als die Zonengrenze des ungeschwächten Glases. In Figur 7 ist das schematisch anhand einer vor dem thermischen Vorspannen eingebrachten Kerbe 36 illustriert: die Zonengrenze 31 weicht der Kerbe 36 bis zu einem gewissen Grad nach innen aus. Im Einzelfall kann versucht werden, mittels Modellrechnungen und/oder dem optischen Sichtbarmachen der Zonengrenze verifiziert zu verifizieren, ob die Bedingung erfüllt ist oder nicht.

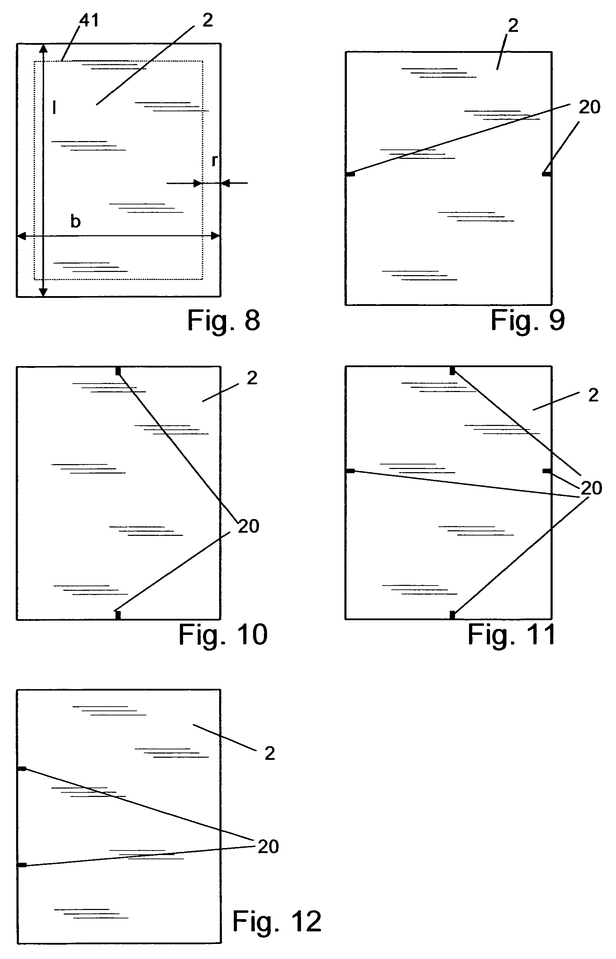

Anhand Figuren 8 bis 13 wird noch die Anordnung der (mechanischen) gezielten lokalen Schwächung auf einer Glasscheibe für ein Brandschutz-Verbundglas diskutiert. Jede dieser Figuren zeigt schematisch eine Ansicht auf eine der Flachseiten einer Glasscheibe 2.

**Figur 8** zeigt eine gepunktete Linie 41 welche einen Randbereich von einem zentralen Bereich abgrenzt. Die gezielte lokale Schwächung erstreckt sich vorzugsweise ganz im Randbereich. Die Breite *r* des Randbereichs kann abhängig von der gewählten Rahmenkonstruktion sein: mit Vorteil wird im eingebauten Zustand des Brandschutz-Verbundglases die lokale Schwächung durch den Rahmen ganz abgedeckt. Alternativ dazu kann sich die lokale Schwächung auch wenig in den lichten Bereich hinein erstrecken, wobei aber mindestens die so genannte Hauptzone frei von Beeinträchtigungen durch die lokale Schwächung bleibt. Im Allgemeinen und unabhängig von der Rahmenwahl kann bspw. vorgesehen sein, dass die Breite *r* der Randzone höchstens 10% der Breite *b* der Glasscheibe oder höchstens 10% der Länge *l* der Glasscheibe beträgt.

In der Ausführungsform gemäss **Figur 9** sind zwei lokale Schwächungen 20 vorhanden, und zwar an Kanten mit der grössten Längenausdehnung (d.h. entlang der Längsseiten; an den Längskanten). Das Anbringen mindestens einer Schwächung - oder wie in Figur 9 je einer lokalen Schwächung an beiden Längskanten - ist in vielen Situationen eine bevorzugte Anordnung.

**Figur 10** zeigt eine alternative Anordnung von zwei einander gegenüberliegenden lokalen Schwächungen entlang der Schmalseiten, und zwar ebenfalls jeweils ungefähr in deren Mitte. In der Ausführungsform gemäss **Figur 11** sind die lokalen Schwächungen 20 sowohl entlang der Längsseiten als auch entlang der Schmalseiten, jeweils in der Mitte, vorhanden. Die Ausführungsform gemäss **Figur 12****,** schliesslich, weist zwei lokale Schwächungen entlang einer Längsseite auf; analog können auch je zwei lokale Schwächungen an beiden Längskanten vorliegen. Viele weitere Anordnungen sind denkbar, die Anordnungen können unter Umständen an spezifische Gegebenheiten wie bspw. Rahmenkonstruktionen oder architektonische Randbedingungen angepasst sein.

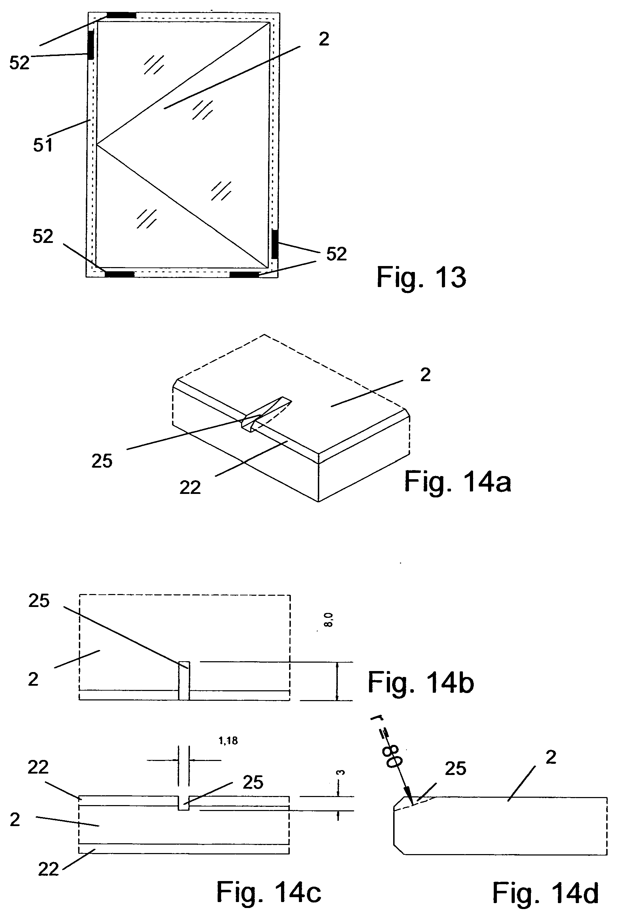

**Figur 13** zeigt noch eine schematische Darstellung eines Brandschutz-Verbundglas-Bauelements mit Rahmen 51. Die Ausdehnung der Glasscheiben mit dazwischen liegender Brandschutz-Zwischenschicht ist durch die gestrichelte Linie dargestellt. Die lokale Schwächung(en) ist/sind vollständig vom Rahmen 51 abgedeckt. Mit dem Bezugszeichen 52 ist schematisch eine mögliche Anordnung der Klotzung bezeichnet.

In den illustrierten Ausführungsbeispielen wurde jeweils eine rechteckige Form des Brandschutz-Verbundglases angenommen. Selbstverständlich ist die illustrierte Form bloss eine von vielen Möglichkeiten, insbesondere sind auch Formen mit einem grösseren Verhältnis zwischen Länge und Breite oder mit einem kleineren Verhältnis zwischen Länge und Breite - bis hin zu quadratischen Formen denkbar. Weiter ist die Erfindung auch für Ausführungsbeispiele mit anderen als rechteckigen Formen geeignet. Die Form des Brandscheibenverbundglases ist insgesamt keine kritische Grösse; es hat sich jedoch gezeigt, dass der Nutzen des erfindungsgemässen Vorgehens bei Formen mit einem grossen Verhältnis zwischen einer Länge und einer Breite (insoweit diese beiden Grössen klar definiert sind) besonders ausgeprägt ist. **Figuren 14a bis 14d** illustrieren noch ein Beispiel einer Glasscheibe 2. Die Kerbe 25 ist vor dem thermischen Vorspannen mit einer Trennscheibe mit Radius 80 mm und Scheibendicke 1.18 mm zugefügt, die Tiefe der Kerbe beträgt an ihrer tiefsten Stelle (an der Kante) 3 mm; die Ausdehnung in die Plattenebene hinein 8 mm.

In Brandschutzversuchen, in denen ein Verbundglas aus zwei Glasscheiben je gemäss dem Beispiel der Figuren 14a bis 14d mit einer ausgehärteten, aufschäumenden Brandschutzschicht auf Alkalisilikatbasis dazwischen (SGG CONTRAFLAM® 30 - Scheiben; Aufbau der Gläser 5mm ESG / 6mm Silikat-Zwischenschicht / 5mm ESG, Scheibengröße 665 x 1890mm) und Ausrichtung der Kerbe 25 nach aussen unter Standard-Testbedingungen gemäss EN 1363 / ISO 834 einer grossen Hitzeeinwirkung ausgesetzt wurden, ergab sich reproduzierbar schon zu einem vergleichsweise frühen Zeitpunkt ein Bruch der brandseitigen (heissseitigen) Glasscheibe von der lokalen Schwächung aus, durch den zuverlässig ein Druckaufbau im Zwischenraum zwischen den Glasscheiben verhindert werden konnte. Insbesondere konnte ein Platzen schon nach einer halb so langen Zeit (2 Minuten anstatt 4 Minuten) beobachtet werden wie ohne gezielte Schwächung. Die kaltseitige Glasscheibe und die Zwischenschicht blieben durch diesen Bruch unberührt.

In einem weiteren Beispiel wurde ein Verbundglas gemäss obigem Beispiel verwendet, aber mit Orientierung der Kerbe gegen innen. Auch dies führte zuverlässig zu einem früheren Bruch, wobei der Bruch weniger früh zu beobachten war als beim Brandschutz-Verbundglas gemäss dem ersten Beispiel.

## Patentansprüche

1. Brandschutz-Verbundglas, aufweisend mindestens zwei transparente Trägerelemente und eine zwischen den Trägerelementen angeordnete Brandschutz-Zwischenschicht (3, 3.1, 3.2, 6), wobei mindestens eines der Trägerelemente eine mit mindestens einer als Sollbruchstelle ausgestalteten, definierten lokalen Schwächung (20; 25-29) versehene Glasplatte (2, 2.1, 2.2, 2.3, 2.4) ist, **dadurch gekennzeichnet, dass** mindestens zwei durch die Brandschutz-Zwischenschicht bzw. eine der Brandschutz-Zwischenschichten verbundene Trägerelemente Glasplatten sind, die je mit mindestens einer als Sollbruchstelle ausgestalteten lokalen Schwächung (20; 25-29) versehen sind, wobei die Brandschutz-Zwischenschicht als aufschäumende/aufblähende Brandschutz-Zwischenschicht ausgebildet ist, und
wobei die lokale Schwächung als örtlich definierte und begrenzte an der Glasplatte vorgenommene Materialabtragung vorliegt, wobei diese die Form einer Furche, Kerbe, Einfräsung, Vertiefung und/oder Einkerbung vorliegt.

2. Brandschutz-Verbundglas nach Anspruch 1, **dadurch gekennzeichnet, dass** die Brandschutz-Zwischenschicht eine im Brandfall aufschäumende oder Gas freisetzende Brandschutz-Zwischenschicht (3, 3.1, 3.3) ist.

3. Brandschutz-Verbundglas nach Anspruch 1 oder 2, **dadurch gekennzeichnet, dass** die Brandschutz-Zwischenschicht (3, 3.1, 3.2, 6) unter Hitzeeinwirkung einen Druckanstieg verursacht, welcher über den Druckanstieg gemäss der allgemeinen Gasgleichung für ideale Gase hinausgeht.

4. Brandschutz-Verbundglas nach einem der vorangehenden Ansprüche, **dadurch gekennzeichnet, dass** die mit mindestens einer lokalen Schwächung versehene Glasscheibe bzw. mindestens eine der mit mindestens einer lokalen Schwächung versehene Glasplatten (2, 2.1-2.4) ein vorgespanntes Glas ist.

5. Brandschutz-Verbundglas nach einem der Ansprüche 1-4, **dadurch gekennzeichnet, dass** die Furche (25, 28) sich auf einer Flachseite von einer Kante der Glasplatte nach innen erstreckt.

6. Brandschutz-Verbundglas nach einem der Ansprüche 1-4, **dadurch gekennzeichnet, dass** die Furche (27) an einer Kante der Glasplatte vorhanden ist.

7. Brandschutz-Verbundglas nach einem der vorangehenden Ansprüche, **dadurch gekennzeichnet, dass** die lokale Schwächung innerhalb einer Spannungszone angeordnet ist und keine Grenze zwischen zwei Spannungszonen durchquert.

8. Brandschutz-Verbundglas nach einem der vorangehenden Ansprüche, **dadurch gekennzeichnet, dass** die Glasplatte ein mathematisch konvexer Körper ist und die lokale Schwächung eine Abweichung von der Konvexität darstellt.

9. Brandschutz-Verbundglas nach einem der vorangehenden Ansprüche, **gekennzeichnet durch**, mindestens drei transparente Trägerelemente, wobei zwischen zwei der Trägerelemente ein gasgefüllter oder vakuumierter Zwischenraum vorhanden ist, wodurch das Verbundglas zum Brandschutz-Isolierglas wird.

10. Brandschutz-Verbundglas nach einem der vorangehenden Ansprüche, **dadurch gekennzeichnet dass** die mindestens eine Glasplatte, flach, gewölbt oder gebogen ist.

## Claims

1. A fire protection glazing comprising at least two transparent support elements and an fire protection layer (3, 3.1, 3.2, 6) arranged between the support elements, at least one of the support elements is a glass plate (2, 2.1, 2.2, 2.3, 2.4) provided with at least one defined local weakening (20; 25-29) designed as predetermined breaking point **characterized in that** at least two support elements joined by the intermediate layer or one of the intermediate layers are glass plates which are each provided with at least one local weakening (20; 25-29) designed as predetermined breaking point, wherein the fire protection layer is designed as intumescent and/or expanding fire protection layer and,wherein the defined local weakening is defined as a positionally defined and delimited removal of material carried out on the glass plate and is designed as in the form of a furrow, notch, recess, groove and/or an indentation.

2. The fire protection glazing as claimed in claim 1, **characterized in that** the fire protection layer is a fire protection layer (3, 3.1, 3.3) which intumesces or releases glass in the case of fire.

3. The fire protection glazing as claimed in claim 1 or 2, **characterized in that** under the action of heat the fire protection layer (3, 3.1, 3.2, 6) causes an increase in pressure which goes beyond the increase in pressure according to the general gas equation for ideal gases.

4. The fire protection glazing as claimed in any one of the preceding claims, **characterized in that** the glass pane provided with at least one local weakening or at least one of the glass plates (2, 2.1-2.4) provided with the at least one local weakening is a toughened glass.

5. The fire protection glazing as claimed in any one of claims 1-4, **characterized in that** the furrow (25, 28) extends inwards from an edge of the glass plate on a flat side.

6. The fire protection glazing as claimed in any one of claims 1-4, **characterized in that** the furrow (27) is present at an edge of the glass plate.

7. The fire protection glazing as claimed in claim 5 and any one of claims 6 to 9, **characterized in that** the local weakening is arranged within a stress zone and does not cross any boundary between two stress zones.

8. The fire protection glazing as claimed in any one of the preceding claims, **characterized in that** the glass plate is a mathematically convex body and the local weakening represents a deviation from the convex nature.

9. The fire protection glazing as claimed in any one of the preceding claims, **characterized by** at least three transparent support elements, with a gas-filled or evacuated intermediate space being present between two of the support elements, as a result of which the glazing becomes an insulating fire protection glass.

10. The fire protection glazing as claimed in any one of the preceding claims, **characterized in that** the at least one glass plate is flat, arched or curved.

## Revendications

1. Verre feuilleté coupe-feu, présentant au moins deux éléments de support transparents et une couche intermédiaire coupe-feu (3, 3.1, 3.2, 6) disposée entre les éléments de support, au moins un des éléments de support étant une plaque de verre (2, 2.1, 2.2, 2.3, 2.4) dotée d'au moins une zone affaiblie locale définie (20; 25-29) configurée comme point de rupture théorique, **caractérisé en ce qu'**au moins deux éléments de support reliés par la couche intermédiaire coupe-feu ou une des couches intermédiaires coupe-feu sont des plaques de verre, qui sont chacune dotées d'au moins une zone affaiblie locale définie (20; 25-29) configurée comme point de rupture théorique, la couche intermédiaire coupe-feu étant formée par une couche intermédiaire coupe-feu moussante/gonflante, et la zone affaiblie locale se présentant sous la forme d'un enlèvement de matière localement défini et limité dans la plaque de verre, l' enlèvement de matière se présentant sous la forme d'un sillon, d'une entaille, d'un fraisage, d'un creux et/ou d'une rainure.

2. Verre feuilleté coupe-feu selon la revendication 1, **caractérisé en ce que** la couche intermédiaire coupe-feu est une couche intermédiaire coupe-feu (3, 3.1, 3.3) qui mousse ou qui libère du gaz en cas d'incendie.

3. Verre feuilleté coupe-feu selon la revendication 1 ou 2, **caractérisé en ce que** la couche intermédiaire coupe-feu (3, 3.1, 3.2, 6) provoque sous l'effet de la chaleur une augmentation de pression, qui va au-delà de l'augmentation de pression résultant de l'équation générale des gaz pour un gaz idéal.

4. Verre feuilleté coupe-feu selon l'une quelconque des revendications précédentes, **caractérisé en ce que** la plaque de verre dotée d'au moins une zone affaiblie locale ou au moins une des plaques de verre (2, 2.1-2.4) dotée d'au moins une zone affaiblie locale est une vitre trempée.

5. Verre feuilleté coupe-feu selon l'une quelconque des revendications 1 à 4, **caractérisé en ce que** le sillon (25, 28) s'étend sur une face plate depuis un bord de la plaque de verre vers l'intérieur.

6. Verre feuilleté coupe-feu selon l'une quelconque des revendications 1 à 4, **caractérisé en ce que** le sillon (27) se trouve sur un bord de la plaque de verre.

7. Verre feuilleté coupe-feu selon l'une quelconque des revendications précédentes, **caractérisé en ce que** la zone affaiblie locale est disposée à l'intérieur d'une zone de contrainte et ne traverse aucune limite entre deux zones de contrainte.

8. Verre feuilleté coupe-feu selon l'une quelconque des revendications précédentes, **caractérisé en ce que** la plaque de verre est un corps mathématiquement convexe et la zone affaiblie locale représente un écart de la convexité.

9. Verre feuilleté coupe-feu selon l'une quelconque des revendications précédentes, **caractérisé par** au moins trois éléments de support transparents, entre deux des éléments de support se trouvant un espace intermédiaire rempli de gaz ou mis sous vide, faisant du verre feuilleté un vitrage isolant coupe-feu.

10. Verre feuilleté coupe-feu selon l'une quelconque des revendications précédentes, **caractérisé en ce que** ladite au moins une plaque de verre est plate, bombée ou courbée.
